# EUROPÄISCHE PATENTSCHRIFT

(11) **EP 3 818 825 B1**
(45) Veröffentlichungstag und Bekanntmachung des Hinweises auf die Patenterteilung: **17.08.2022**
(21) Anmeldenummer: 20401057.3
(22) Anmeldetag: 02.11.2020
(51) Int. Cl.: A01M 7/00

(54) **VERFAHREN ZUM REINIGEN EINES WIRKSTOFFTANKS**
METHOD FOR CLEANING AN AGENT TANK
PROCÉDÉ DE NETTOYAGE D'UN RÉSERVOIR DE SUBSTANCE ACTIVE

(30) Priorität: 08.11.2019 DE 102019130127
(43) Veröffentlichungstag der Anmeldung: 12.05.2021
(73) Patentinhaber: Amazonen-Werke H. Dreyer SE & Co. KG, 49205 Hasbergen (DE)
(72) Erfinder: große Prues, Frank, 49593 Bersenbrück (DE); Heer, Jochen, 49074 Osnabrück (DE); Lampe, Toivo, 49080 Osnabrück (DE)

(56) Entgegenhaltungen:
- EP-A1- 2 946 664
- EP-A1- 3 167 712
- EP-A1- 3 225 111
- DE-A1-102004 047 585
- DE-A1-102017 115 226

## Beschreibung

Die Erfindung betrifft ein Verfahren zum Reinigen eines Wirkstofftanks eines Direkteinspeisesystems eines landwirtschaftlichen Spritzgeräts nach dem Oberbegriff des Patentanspruchs 1 und ein landwirtschaftliches Spritzgerät nach dem Oberbegriff des Patentanspruchs 10.

Zum Ausbringen von Spritzflüssigkeit auf eine landwirtschaftliche Nutzfläche werden vermehrt landwirtschaftliche Spritzgeräte eingesetzt, welche über ein Direkteinspeisesystem verfügen. Mittels des Direkteinspeisesystems kann die auszubringende Spritzflüssigkeit geräteintern während des Ausbringvorgangs hergestellt werden. Hierzu wird ein Wirkstoff mittels des Direkteinspeisesystems in eine Flüssigkeit eingespeist, sodass die Flüssigkeit und der eingespeiste Wirkstoff zu der auszubringenden Spritzflüssigkeit vermischt werden. Die Flüssigkeit, in welche der Wirkstoff eingespeist wird, wird üblicherweise in einem großvolumigen Vorratsbehälter des landwirtschaftlichen Spritzgeräts während des Ausbringvorgangs mitgeführt. Der einzuspeisende Wirkstoff wird in einem separaten Wirkstofftank mitgeführt.

Bei dem Wirkstoff handelt es sich häufig um ein äußerst zähflüssiges und/oder klebriges Konzentrat, dessen Restmengen langfristig zu Funktionsbeeinträchtigungen führen können. Ein weiteres Problem stellen sog. Wirkstoffverschleppungen dar, bei welchen Restmengen zu einer Beeinflussung eines nachfolgenden Ausbringvorgangs führen können. Aus diesen Gründen sind Restmengen nach der Beendigung eines Ausbringvorgangs aus dem Wirkstofftank zu entfernen. Aus der Druckschrift DE 44 03 141 C2 ist bereits eine Möglichkeit zur Reinigung von Gebinden durch einen Spülvorgang bekannt.

Bei Direkteinspeisesystemen von landwirtschaftlichen Spritzgeräten besteht das Problem, dass die Einspeiseleitung, über welche der Wirkstoff zum geräteinternen Herstellen der auszubringenden Spritzflüssigkeit eingespeist wird, für vergleichsweise kleine Flüssigkeitsmengen ausgelegt ist. Beim Spülen eines Wirkstofftanks fallen jedoch vergleichsweise große Mengen an Spülflüssigkeit an, welche nicht ohne Weiteres über den Einspeisepfad aus dem Wirkstofftank abgeführt werden können.

In den Druckschriften DE 10 2017 115 226 A1 und DE 10 2004 047 585 A1 wird vorgeschlagen, die bei der Reinigung eines Wirkstofftanks anfallende Spüllösung in einen Auffangbehälter einzuleiten.

Diese und andere bekannten Ansätze zum Reinigen eines Wirkstofftanks sind jedoch vergleichsweise zeit- und/oder arbeitsaufwendig und/oder bedingen zusätzliche Gerätekomponenten, wie etwa einen Auffangbehälter für eine Spüllösung.

Die der Erfindung zugrundeliegende Aufgabe besteht somit darin, das Reinigen eines Wirkstofftanks eines Direkteinspeisesystems eines landwirtschaftlichen Spritzgeräts zu vereinfachen.

Die Aufgabe wird gelöst durch ein Verfahren der eingangs genannten Art, wobei die in den Wirkstofftank des Direkteinspeisesystems eingespülte Flüssigkeit im Rahmen des erfindungsgemäßen Verfahrens über eine separate Ausspülleitung und über Leitungsabschnitte des Umlaufsystems zu den Ausbringelementen gefördert wird.

Die Erfindung macht sich die Erkenntnis zunutze, dass die limitierten Fördereigenschaften der Einspeiseleitung die Fördermenge an Spülflüssigkeit nicht länger beeinflussen, wenn zum Abführen der in den Wirkstofftank des Direkteinspeisesystem eingespülten Flüssigkeit eine separate Ausspülleitung verwendet wird, über welche die in dem Wirkstofftank des Direkteinspeisesystem eingespülte Flüssigkeit zum Ausbringen über die Ausbringelemente in Leitungsabschnitte des Umlaufsystems eingeleitet werden kann. Die in dem Wirkstofftank des Direkteinspeisesystems nach Beendigung eines Ausbringvorgangs vorliegende Restmenge an hochkonzentriertem Pflanzenschutzmittel kann über die Verwendung einer separaten Ausspülleitung mit einem vergleichsweise geringen Aufwand entfernt werden. Dies gilt insbesondere, wenn das Pflanzenschutzmittel eine zähflüssige und/oder klebrige Konsistenz aufweist, sodass zum Reinigen des Wirkstofftanks große Mengen an Flüssigkeit aus dem Vorratsbehälter in den Wirkstofftank einzuleiten und aus dem Wirkstofftank abzuführen sind.

Der Vorratsbehälter für die Flüssigkeit zum Reinigen des Wirkstofftanks kann alternativ oder zusätzlich ein separater Spülwassertank sein.

Die zum Spülen des Wirkstofftanks des Direkteinspeisesystems verwendete Flüssigkeit kann über die Ausbringelemente auf die landwirtschaftliche Nutzfläche abgegeben werden. Die Ausbringelemente sind vorzugsweise als Spritzdüsen ausgebildet. Der Wirkstofftank des Direkteinspeisesystems kann auch als Zwischengebinde bezeichnet werden. Der in das Umlaufsystem integrierte Vorratsbehälter kann auch als Hauptbrühebehälter bezeichnet werden. Die Ausbringelemente können an einem Spritzgestänge des landwirtschaftlichen Spritzgeräts angeordnet sein. Die zum Spülen verwendete Flüssigkeit kann Wasser oder eine vorgemischte Spritzbrühe sein. Das Einspülen der Flüssigkeit aus dem Vorratsbehälter in den Wirkstofftank des Direkteinspeisesystems erfolgt vorzugsweise über eine Einspülleitung.

Der Wirkstofftank kann ein fester Bestandteil des landwirtschaftlichen Spritzgeräts sein. Ferner kann der Wirkstofftank auch ein auswechselbarer Flüssigkeitsbehälter sein. Beispielsweise ist der Wirkstofftank über ein Aufnahme- und Arretiersystem des landwirtschaftlichen Spritzgeräts mit dem Direkteinspeisesystem gekoppelt. Das Aufnahme- und Arretiersystem kann ein Closed-Transfer-System (CTS) sein.

In einer bevorzugten Ausführungsform des erfindungsgemäßen Verfahrens wird während des Förderns der in den Wirkstofftank des Direkteinspeisesystems eingespülten Flüssigkeit zu den Ausbringelementen ein Einleiten der in den Wirkstofftank des Direkteinspeisesystems eingespülten Flüssigkeit in den Vorratsbehälter verhindert. Die zum Spülen des Wirkstofftanks des Direkteinspeisesystems verwendete Flüssigkeit kann somit ohne Kontamination der Flüssigkeit in dem Vorratsbehälter durch den Wirkstoff aus dem Wirkstofftank des Direkteinspeisesystems ausgebracht werden. Vorzugsweise wird bereits während des Einspülens der Flüssigkeit in den Wirkstofftank des Direkteinspeisesystems ein Einleiten der in den Wirkstofftank des Direkteinspeisesystem eingespülten Flüssigkeit in den Vorratsbehälter verhindert.

In einer Weiterbildung des erfindungsgemäßen Verfahrens wird die zuvor in den Wirkstofftank des Einspeisesystems eingespülte Flüssigkeit durch die Ausbringelemente abgegeben. Während des Abgebens der zuvor den Wirkstofftank des Direkteinspeisesystems eingespülten Flüssigkeit durch die Ausbringelemente wird ein Einleiten der zuvor in dem Wirkstofftank des Direkteinspeisesystems eingespülten Flüssigkeit in den Vorratsbehälter verhindert. Insbesondere wird ein Rückfluss der zuvor in den Wirkstofftank des Einspeisesystems eingespülten Flüssigkeit aus dem Umlaufsystem in den Vorratsbehälter verhindert, insbesondere durch Verhindern des Zurückfließens von Flüssigkeit aus dem Umlaufsystem in den Vorratsbehälter.

Es ist darüber hinaus ein erfindungsgemäßes Verfahren vorteilhaft, bei welchem das Umlaufsystem eine oder mehrere mit dem Vorratsbehälter verbundene Rückführleitungen aufweist, mittels welchen Flüssigkeit in den Vorratsbehälter zurückführbar ist. Zum Verhindern des Einleitens der in den Wirkstofftank des Direkteinspeisesystems eingespülten Flüssigkeit in den Vorratsbehälter wird eine oder werden mehrere Rückführleitungen gesperrt. Vorzugsweise ist in der einen oder den mehreren Rückführleitungen jeweils zumindest ein Ventil angeordnet, über welches die jeweilige Rückführleitung sperrbar ist. Insbesondere wird eine entsprechende Schaltung des einen oder der mehreren Ventile zum Sperren der einen oder der mehreren Rückführleitungen durch eine Steuerungseinrichtung des landwirtschaftlichen Spritzgeräts veranlasst, wenn Flüssigkeit aus dem Vorratsbehälter des landwirtschaftlichen Spritzgeräts in den Wirkstofftank des Direkteinspeisesystems zum Reinigen des Wirkstofftanks eingespült wird. Die Rückführleitungen sind vorzugsweise mit Behälterdüsen verbunden, welche bei freigegebenen Rückführleitungen die über die Rückführleitungen zurückgeführte Flüssigkeit in den Vorratsbehälter abgeben. Die Behälterdüsen sorgen für eine Flüssigkeitsströmung innerhalb des Vorratsbehälters und können aus diesem Grund auch als Rührwerke bezeichnet werden. Um Ablagerungen in Vorratsbehälter zu verhindern, kann während der Reinigung auch eine Sperrzeit berücksichtigt werden, nach deren Ablauf die Rückführleitungen wieder freigegeben werden, sodass sich wieder eine Flüssigkeitsströmung innerhalb des Vorratsbehälters einstellt. Beispielsweise erfolgt die Reinigung des Wirkstofftanks in der ersten Minute mit gesperrten Rückführleitungen und danach mit freigegeben Rückführleitungen. In der ersten Minute werden beispielsweise 90 % des Wirkstoffes aus dem Wirkstofftank ausgespült. Die Einleitung der übrigen 10% des Wirkstoffs in den Vorratsbehälter kann, je nach Wirkstoff, tolerierbar sein, um Ablagerungen in dem Vorratsbehälter zu vermeiden.

In einer Weiterbildung des erfindungsgemäßen Verfahrens wird die Fördermenge an Flüssigkeit während des Reinigens des Wirkstofftanks durch Anpassen der

Pumpleistung einer oder mehrerer Pumpen des landwirtschaftlichen Spritzgeräts derart eingestellt, dass die den Ausbringelementen zugeleitete Flüssigkeit vollständig abgegeben wird. Dadurch, dass die den Ausbringelementen zugeleitete Flüssigkeit vollständig abgegeben wird, wird eine Rückführung der den Ausbringelementen zugeleiteten Flüssigkeit in den Vorratsbehälter vermieden. Eine Kontamination der in dem Vorratsbehälter befindlichen Flüssigkeit durch den Wirkstoff wird somit effektiv vermieden. Alternativ oder zusätzlich zu der Anpassung der Pumpleistung einer oder mehrerer Pumpen des landwirtschaftlichen Spritzgeräts kann die Fördermenge an Flüssigkeit auch durch ein oder mehrere Drosselelemente, wie beispielsweise Durchflussregelventile, eingestellt werden, um zu vermeiden, dass den Ausbringelementen übermäßig viel Flüssigkeit während des Reinigens des Wirkstofftanks zugeführt wird.

Darüber hinaus ist ein erfindungsgemäßes Verfahren vorteilhaft, bei welchem das Fördern der in den Wirkstofftank des Direkteinspeisesystems eingespülten Flüssigkeit zu den Ausbringelementen mittels einer Umlaufpumpe erfolgt, welche auch beim Ausbringen der Flüssigkeit aus dem Vorratsbehälter über das Umlaufsystem ohne Spülen des Wirkstofftanks eingesetzt wird. Das Ausbringen der Flüssigkeit aus dem Vorratsbehälter über das Umlaufsystem erfolgt vorzugsweise in einem Umlaufmodus des landwirtschaftlichen Spritzgeräts. Alternativ zu dem Umlaufmodus kann das landwirtschaftliche Spritzgerät auch in einem Einspeisemodus betrieben werden, in welchem der in dem Wirkstofftank vorhandene Wirkstoff über eine Einspeiseleitung in die Flüssigkeit eingespült wird, sodass die auszubringende Spritzflüssigkeit während des Ausbringvorgangs geräteintern hergestellt wird. Über die Umlaufpumpe wird die in den Wirkstofftank des Direkteinspeisesystems eingespülte Flüssigkeit während des Reinigungsvorgangs aus dem Wirkstofftank abgesaugt. Der Wirkstofftank befindet sich somit auf der Saugseite der Umlaufpumpe.

In einer anderen bevorzugten Ausführungsform des erfindungsgemäßen Verfahrens ist die zum Fördern der in den Wirkstofftank des Direkteinspeisesystems eingespülten Flüssigkeit zu den Ausbringelementen verwendete Ausspülleitung separat zu einer Einspeiseleitung ausgebildet, welche beim aktiven Einspeisen von Wirkstoff aus dem Wirkstofftank in die Flüssigkeit aus dem Vorratstank mittels des Direkteinspeisesystems verwendet wird. In dem Einspeisemodus des landwirtschaftlichen Spritzgeräts wird zum Einspeisen des Wirkstoffs aus dem Wirkstofftank in die Flüssigkeit aus dem Vorratstank eine Wirkstoffpumpe betrieben, wobei die Wirkstoffpumpe vorzugsweise in dem Einspeisepfad des Wirkstoffs angeordnet ist.

Das erfindungsgemäße Verfahren wird ferner dadurch vorteilhaft weitergebildet, dass eine Steuerungseinrichtung des landwirtschaftlichen Spritzgeräts eine Unterbrechung des Einspülens der Flüssigkeit aus dem Vorratsbehälter in den Wirkstofftank des Direkteinspeisesystems veranlasst, wenn die den Ausbringelementen zugeleitete Durchflussmenge an Flüssigkeit eine maximale Ausbringmenge erreicht oder überschreitet. Alternativ oder zusätzlich veranlasst die Steuerungseinrichtung des landwirtschaftlichen Spritzgeräts eine Unterbrechung des Einspülens der Flüssigkeit aus dem Vorratsbehälter in den Wirkstofftank des Direkteinspeisesystems, wenn in dem Wirkstofftank ein vorgegebener Füllstand erreicht oder überschritten wird. Vor den Ausbringelementen, beispielsweise am Spritzgestände des landwirtschaftlichen Spritzgeräts, ist vorzugsweise ein Durchflussmesser angeordnet, mittels welchem die den Ausbringelementen zugeleitete Durchflussmenge an Flüssigkeit erfassbar ist. Die maximale Ausbringmenge kann von der Anzahl der aktiven bzw. freigegebenen Ausbringelemente abhängig sein. Die Anzahl der aktiven bzw. freigegebenen Ausbringelemente kann durch die Steuerungseinrichtung erfasst oder überwacht werden. In dem Wirkstofftank ist vorzugsweise ein Füllstandssensor angeordnet, mittels welchem der Füllstand in dem Wirkstofftank erfassbar ist.

Die der Erfindung zugrundeliegende Aufgabe wird ferner durch ein landwirtschaftliches Spritzgerät der eingangs genannten Art gelöst, wobei das erfindungsgemäße Spritzgerät eine separate Ausspülleitung aufweist, über welche die in den Wirkstofftank des Direkteinspeisesystems eingespülte Flüssigkeit zur Ausbringung über die Ausbringelemente in Leitungsabschnitte des Umlaufsystems förderbar ist. Die zum Fördern der in den Wirkstofftank des Direkteinspeisesystems eingespülten Flüssigkeit in das Umlaufsystem verwendete Ausspülleitung ist separat zu einer Einspeiseleitung ausgebildet, welche beim aktiven Einspeisen von Wirkstoff aus dem Wirkstofftank in die Flüssigkeit aus dem Vorratstank mittels des Direkteinspeisesystems verwendet wird.

Das erfindungsgemäße landwirtschaftliche Spritzgerät wird durch eine Steuerungseinrichtung vorteilhaft weitergebildet, welche dazu eingerichtet ist, in dem Spülmodus des Spritzgeräts ein Einspülen von Flüssigkeit in den Wirkstofftank des Direkteinspeisesystems zu veranlassen. Das Einspülen von Flüssigkeit in den Wirkstofftank des Direkteinspeisesystems kann beispielsweise durch das Schalten von einem oder mehreren Ventilen und/oder das Aktivieren und/oder Deaktivieren von einer oder mehreren Förderpumpen erfolgen.

In einer weiteren bevorzugten Ausführungsform des erfindungsgemäßen landwirtschaftlichen Spritzgeräts weist das Umlaufsystem eine oder mehrere mit dem Vorratsbehälter verbundene Rückführleitung auf, mittels welchen Flüssigkeit in den Vorratsbehälter zurückführbar ist. Die Steuerungseinrichtung ist vorzugsweise dazu eingerichtet, in dem Spülmodus des Spritzgeräts die eine oder die mehreren Rückführleitungen zu sperren, um ein Einleiten der in den Wirkstofftank des Direkteinspeisesystems eingespülten Flüssigkeit in den Vorratsbehälter zu verhindern. Dadurch, dass ein Einleiten der in den Wirkstofftank des Direkteinspeisesystems eingespülten Flüssigkeit in den Vorratsbehälter verhindert wird, kommt es nicht zu einer Kontamination der in dem Vorratsbehälter befindlichen Flüssigkeit.

Das erfindungsgemäße landwirtschaftliche Spritzgerät wird ferner dadurch vorteilhaft weitergebildet, dass in der einen oder mehreren Rückführleitungen jeweils zumindest ein Ventil angeordnet ist, über welches die jeweilige Rückführleitung sperrbar ist. Das eine oder die mehreren Ventile können als Rückflussregelventile ausgebildet sein. Über das eine oder die mehreren Ventile kann die eine oder können die mehreren Rückführleitungen gesperrt und freigegeben werden. Ferner kann die Durchflussmenge durch die eine oder die mehreren Rückführleitungen mittels des Ventils bzw. der Ventile eingestellt werden.

Es ist außerdem ein erfindungsgemäßes landwirtschaftliches Spritzgerät bevorzugt, bei welchem das Umlaufsystem eine Umlaufpumpe aufweist, über welche in einem Umlaufmodus des Spritzgeräts Flüssigkeit aus dem Vorratsbehälter über das Umlaufsystem ohne Spülen des Wirkstofftanks zu den Ausbringelementen förderbar ist. In diesem Fall wird die Flüssigkeit aus dem Vorratsbehälter nicht über die Einspülleitung in den Wirkstofftank geleitet. Somit kann mittels des landwirtschaftlichen Spritzgeräts auch eine vorgemischte Spritzbrühe ohne Verwendung des Direkteinspeisesystems auf eine landwirtschaftliche Nutzfläche ausgebracht werden.

In einer anderen Ausführungsform des erfindungsgemäßen landwirtschaftlichen Spritzgeräts ist in dem Spülmodus des Spritzgeräts die in den Wirkstofftank des Direkteinspeisesystems eingespülte Flüssigkeit über die Umlaufpumpe zu den Ausbringelementen förderbar. Vorzugsweise wird in dem Spülmodus des Spritzgeräts die in den Wirkstofftank des Direkteinspeisesystems eingespülte Flüssigkeit über die Umlaufpumpe aus dem Wirkstofftank abgesaugt. Folglich befindet sich der Wirkstofftank auf der Saugseite der Umlaufpumpe.

In einer weiteren Ausführungsform des erfindungsgemäßen landwirtschaftlichen Spritzgeräts umfasst das Direkteinspeisesystem eine separat zu dem Umlaufsystem ausgebildete Einspeiseleitung, über welche Wirkstoff aus dem Wirkstofftank in einem Einspeisemodus des Spritzgeräts in die Flüssigkeit aus dem Vorratsbehälter einspeisbar ist. Die Einspeiseleitung ist separat zu der Ausspülleitung ausgebildet.

Das landwirtschaftliche Spritzgerät ist vorzugsweise dazu eingerichtet, dass der Wirkstofftank des Direkteinspeisesystems mittels eines Verfahrens nach einem der vorstehend beschriebenen Ausführungsformen reinigbar ist. Hinsichtlich der Vorteile und Modifikationen eines entsprechenden landwirtschaftlichen Spritzgeräts wird auf die Vorteile und Modifikationen des erfindungsgemäßen Verfahrens verwiesen.

Nachfolgend wird eine bevorzugte Ausführungsform der Erfindung unter Bezugnahme auf die beiliegende Zeichnung näher erläutert und beschrieben. Dabei zeigt:

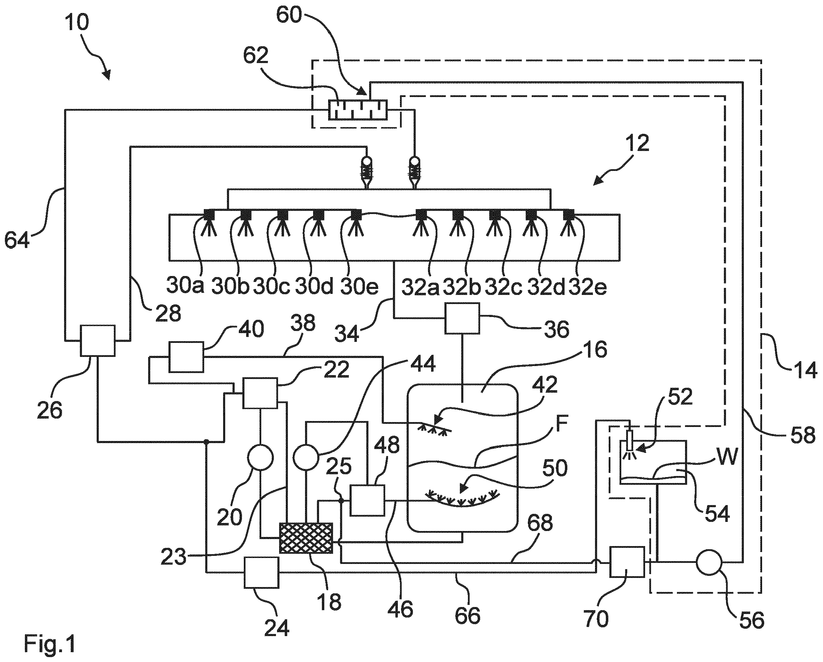

- Fig. 1: ein Ausbringsystem eines erfindungsgemäßen Spritzgeräts in einer schematischen Darstellung.

Die Fig. 1 zeigt ein Ausbringsystem 10 eines als Feldspritze ausgebildeten landwirtschaftlichen Spritzgeräts. Das landwirtschaftliche Spritzgerät ist sowohl mit einem Umlaufsystem 12 als auch mit einem Direkteinspeisesystem 14 ausgestattet.

Das Umlaufsystem 12 weist einen Flüssigkeitskreislauf auf, wobei in das Umlaufsystem 12 ein Vorratsbehälter 16 für eine Flüssigkeit F integriert ist. Über den Flüssigkeitskreislauf des Umlaufsystems 12 lässt sich die in dem Vorratsbehälter 16 befindliche Flüssigkeit F über Ausbringelemente 30a-30e, 32a-32e auf eine landwirtschaftliche Nutzfläche ausbringen. Die Ausbringelemente 30a-30e, 32a-32 sind als Spritzdüsen ausgebildet. Hierzu ist das landwirtschaftliche Spritzgerät in einem Umlaufmodus zu betreiben. In dem Umlaufmodus zirkuliert die Flüssigkeit F innerhalb des Flüssigkeitskreislaufs des Umlaufsystems 12.

Mittels des Direkteinspeisesystems 14 kann Wirkstoff W aus einem Wirkstofftank 54 in die Flüssigkeit F aus dem Vorratsbehälter 16 zum geräteinternen Herstellen einer auszubringenden Spritzflüssigkeit eingespeist werden. Das Einspeisen erfolgt an der Einspeisestelle 60, welche sich innerhalb einer Mischkammer 62 befindet.

Die in dem Vorratsbehälter 16 befindliche Flüssigkeit F kann Wasser oder eine vorgemischte Spritzbrühe sein. Der in dem Wirkstofftank 54 befindliche Wirkstoff W kann ein hochkonzentriertes Pflanzenschutzmittel sein.

Im Umlaufmodus des landwirtschaftlichen Spritzgeräts wird die in dem Vorratsbehälter 16 befindliche Flüssigkeit F von einer Umlaufpumpe 20 angesaugt und durch einen Filter 18 geleitet. Die Durchflussmenge an Flüssigkeit F kann einstellbar sein. Die Flüssigkeit F wird dem Ventil 26 zugeleitet. Im Umlaufmodus des landwirtschaftlichen Spritzgeräts wird die Flüssigkeit F durch das Ventil 26 in die Ausbringleitung 28 eingeleitet, über welche die Flüssigkeit F dann den Ausbringelementen 30a-30e, 32a-32e zugeleitet wird. Überschüssige Flüssigkeit F wird über die Rückführleitung 34 und das Rückflussregelventil 36 in den Vorratsbehälter 16 zurückgeführt.

Eine weitere Rückführung von Flüssigkeit F aus dem Flüssigkeitskreislauf des Umlaufsystems 16 kann über die Rückführleitung 23 realisiert werden. Zum Einstellen des Rückflusses über die Rückführleitung 23 ist in der Rückführleitung 23 ein Rückflussregelventil 22 angeordnet. Die über die Rückführleitung 23 geleitete Flüssigkeit F wird vor die Pumpe 20, vorzugsweise in den Filter 18, zurückgeführt.

Über das Ventil 40 kann mittels einer Rückführleitung 38 zusätzlich Flüssigkeit F über Rührdüsen 42 in den Vorratsbehälter 16 zurückgeführt werden.

Ferner weist das Ausbringsystem 10 eine Rückführpumpe 44 auf, über welche Flüssigkeit F aus dem Filter 18 angesaugt und über die Rückführleitung 46 und das Rückflussregelventil 48 zurück in den Vorratsbehälter 16 geleitet werden kann. Die über die Rückführleitung 46 in den Vorratsbehälter 16 zurückgeführte Flüssigkeit F wird über Behälterdüsen 50 in den Vorratsbehälter 16 eingebracht. Die Behälterdüsen 42, 50 sorgen für eine Flüssigkeitsströmung innerhalb des Vorratsbehälters 16 und können aus diesem Grund auch als Rührwerke bezeichnet werden. Durch die Flüssigkeitsströmung innerhalb des Vorratsbehälters 16 werden Ablagerungen innerhalb des Vorratsbehälters 16 vermieden. Insbesondere, wenn die Flüssigkeit F eine vorgemischte Spritzbrühe ist, ist eine Strömung innerhalb des Vorratsbehälters 16 erforderlich, um entsprechende Ablagerungen zu vermeiden.

In einem Einspeisemodus des landwirtschaftlichen Spritzgeräts wird der in dem Wirkstofftank befindliche Wirkstoff W über die Einspeiseleitung 58 in die Flüssigkeit F eingespeist. Zum Fördern des Wirkstoffs W aus dem Wirkstofftank 54 zu der Einspeisestelle 60 weist das Direkteinspeisesystems 14 eine Wirkstoffpumpe 56 auf. In dem Einspeisemodus ist das Spülventil 70 geschlossen, sodass der in dem Wirkstofftank 54 befindliche Wirkstoff W durch die Wirkstoffpumpe 56 in die Mischkammer 62 gefördert wird.

Anders als im Umlaufmodus leitet das Ventil 26 die Flüssigkeit F im Einspeisemodus in die Ausbringleitung 64 ein, sodass die Flüssigkeit F aus dem Vorratsbehälter 16 ebenfalls in die Mischkammer 62 eingeleitet wird. In der Mischkammer 62 wird dann geräteintern die auszubringende Spritzflüssigkeit hergestellt, welche anschließend den Ausbringelementen 30a-30e, 32a-32e zugeleitet wird. Im Einspeisemodus wird die Rückführleitung 34 durch das Rückflussregelventil 36 gesperrt, sodass ein Rückfluss der geräteintern hergestellten Spritzflüssigkeit in den Vorratsbehälter 16 vermieden wird. Auf diese Weise wird eine Kontamination der in dem Vorratsbehälter 16 befindlichen Flüssigkeit F durch den Wirkstoff W vermieden.

Nach Beendigung eines Ausbringvorgangs befindet sich in dem Wirkstofftank 54 des Direkteinspeisesystems 14 eine Restmenge an Pflanzenschutzmittel. Das Pflanzenschutzmittel ist dabei häufig ein äußerst zähflüssiges und/oder klebriges Konzentrat, sodass zur Reinigung ein umfangreiches Spülen des Wirkstofftanks 54 erforderlich ist. Zum Reinigen des Wirkstofftanks 54 des Direkteinspeisesystems 14 wird Flüssigkeit F aus dem Vorratsbehälter 16 über das Spülventil 24, die Einspülleitung 66 und die Spüldüse 52 in den Wirkstofftank 54 eingespült. Die in den Wirkstofftank 54 des Direkteinspeisesystems 14 eingespülte Flüssigkeit F wird dann zu den Ausbringelemente 30a-30e, 32a-32e gefördert. Da über die Einspeiseleitung 58 des Direkteinspeisesystems 14 lediglich geringe Flüssigkeitsmengen abgeführt werden können, wird in dem Spülmodus des landwirtschaftlichen Spritzgeräts das Spülventil 70 geöffnet, wodurch die in dem Wirkstofftank 54 des Direkteinspeisesystems 14 eingespülte Flüssigkeit F über eine separate Ausspülleitung 68 und über Leitungsabschnitte des Umlaufsystems 12 zu den Ausbringelementen 30a-30e, 32a-32e gefördert werden kann. Auf diese Weise kann die in den Wirkstofftank 54 des Direkteinspeisesystems 14 eingespülte Flüssigkeit F vergleichsweise rasch über die Ausbringelemente 30a-30e, 32a-32e auf die landwirtschaftliche Nutzfläche abgegeben werden.

Die Ausspülleitung 68 kann auch an einem Injektor 25 zur Unterdruckerzeugung angeschlossen sein, welcher als Treibstrahl den Rückfluss einer Pumpe zum Saugfilter 18 verwendet.

Bei dem Wirkstofftank 54 des Direkteinspeisesystems 14 handelt es sich vorzugsweise um ein Zwischengebinde. Der Wirkstofftank 54 kann ein fest installierter Flüssigkeitsbehälter sein. Alternativ kann der Wirkstofftank 54 ein austauschbarer Behälter sein. Beispielsweise weist das Direkteinspeisesystem 14 ein Aufnahme- und Arretiersystem auf, über welches verschiedene Wirkstofftanks 54 mit dem Direkteinspeisesystem 14 gekoppelt werden können. Das Aufnahme- und Arretiersystem kann ein Closed-Transfer-System (CTS) sein.

Während des Förderns der in den Wirkstofftank 54 eingespülten Flüssigkeit F zu den Ausbringelemente 30a-30e, 32a-32e wird ein Einleiten der in den Wirkstofftank 54 eingeleiteten Flüssigkeit F in den Vorratsbehälter 16 verhindert, um eine Kontamination der in dem Vorratsbehälter 16 befindlichen Flüssigkeit F durch den Wirkstoff W zu vermeiden. Zum Verhindern des Einleitens der in dem Wirkstofftank 54 des Direkteinspeisesystems 14 eingespülten Flüssigkeit F in den Vorratsbehälter 16 werden die Rückführleitungen 34, 38, 46 gesperrt. Hierzu werden die in den Rückführleitungen 34, 38, 46 angeordneten Rückflussregelventile 36, 40, 48 in einen Sperrzustand geschaltet.

Überschreitet die den Ausbringelementen 30a-30e, 32a-32e zugeleitete Durchflussmenge an Flüssigkeit F eine maximale Ausbringmenge, wird die überschüssige Menge über das Rückflussregelventil 22 vor die Pumpe 20, vorzugsweise in den Filter 18, zurückgeführt.

Ferner kann durch ein Anpassen der Pumpleistung der Umlaufpumpe 20 die Fördermenge an Flüssigkeit F während des Reinigens des Wirkstofftanks 54 derart eingestellt werden, dass die den Ausbringelementen 30a-30e, 32a-32e zugeleitete Flüssigkeit F vollständig abgegeben wird. Auf diese Weise wird bereits ein Einleiten von Flüssigkeit F in die Rückführleitung 34 vermieden.

Die zum Fördern der in den Wirkstofftank 54 des Direkteinspeisesystems 14 eingespülten Flüssigkeit F zu den Ausbringelementen 30a-30e, 32a-32e verwendete Ausspülleitung 68 ist separat zu der Einspeiseleitung 58 ausgebildet, welche beim aktiven Einspeisen von Wirkstoff W aus dem Wirkstofftank 54 mittels des Direkteinspeisesystems 14 verwendet wird.

Eine nicht dargestellte Steuerungseinrichtung des landwirtschaftlichen Spritzgeräts veranlasst eine Unterbrechung des Einspülens der Flüssigkeit F aus dem Vorratsbehälter 16 in den Wirkstofftank 54 des Direkteinspeisesystems 14, wenn die den Ausbringelementen 30a-30e, 32a-32e zugeleitete Durchflussmenge an Flüssigkeit F eine maximale Ausbringmenge erreicht oder überschreitet oder in dem Wirkstofftank 54 ein vorgegebener Füllstand erreicht oder überschritten wird. Hierzu kann vor den Ausbringelementen 30a-30e, 32a-32e beispielsweise ein Durchflussmesser angeordnet sein, mittels welchem die den Ausbringelementen 30a-30e, 32a-32e zugeleitete Durchflussmenge an Flüssigkeit F erfassbar ist. Die maximale Ausbringmenge kann von der Anzahl der aktiven bzw. freigegebenen Ausbringelemente 30a-30e, 32a-32e abhängig sein. Die Anzahl der aktiven bzw. freigegebenen Ausbringelemente 30a-30e, 32a-32e kann von dem landwirtschaftlichen Spritzgerät erfasst oder überwacht werden. In dem Wirkstofftank 54 kann ein Füllstandssensor oder Niveauschalter angeordnet sein, mittels welchem der Füllstand in dem Wirkstofftank 54 erfassbar ist.

Die nicht dargestellte Steuerungseinrichtung kann auch das Absaugen der Flüssigkeit F aus dem Wirkstofftank 54 unterbinden, in dem das Spülventil 70 geschlossen wird, sollte die den Ausbringelementen 30a-30e, 32a-32e zugeleitete Durchflussmenge an Flüssigkeit F zu gering sein oder eine Mindestanzahl an Ausbringelementen 30a-30e, 32a-32e deaktiviert sein. Dadurch kann verhindert werden, dass über die Ausbringelemente 30a-30e, 32a-32e eine Flüssigkeit F mit zu hoher Wirkstoffkonzentration ausgebracht wird.

Zusätzlich ist es dazu möglich, dass die Wirkstoffpumpe 56 zu Beginn des Reinigungsvorgangs Flüssigkeit F mit hoher Wirkstoffkonzentration über die Einspeiseleitung 58 gleichmäßig eindosiert.

### Bezugszeichen

- 10: Ausbringsystem
- 12: Umlaufsystem
- 14: Direkteinspeisesystem
- 16: Vorratsbehälter
- 18: Filter
- 20: Umlaufpumpe
- 22: Rückflussregelventil
- 24: Spülventil
- 26: Ventil
- 28: Ausbringleitung
- 30a-30e: Ausbringelemente
- 32a-32e: Ausbringelemente
- 34: Rückführleitung
- 36: Rückflussregelventil
- 38: Rückführleitung
- 40: Rückflussregelventil
- 42: Behälterdüsen
- 44: Rückführpumpe
- 46: Rückführleitung
- 48: Rückflussregelventil50 Behälterdüsen
- 52: Spüldüse
- 54: Wirkstofftank
- 56: Wirkstoffpumpe
- 58: Einspeiseleitung
- 60: Einspeisestelle
- 62: Mischkammer
- 64: Ausbringleitung
- 66: Einspülleitung
- 68: Ausspülleitung
- 70: Spülventil

- F: Flüssigkeit
- W: Wirkstoff

## Patentansprüche

1. Verfahren zum Reinigen eines Wirkstofftanks (54) eines Direkteinspeisesystems (14) eines landwirtschaftlichen Spritzgeräts, mit den Schritten:
- Einspülen einer Flüssigkeit (F) aus einem Vorratsbehälter (16) des landwirtschaftlichen Spritzgeräts in den Wirkstofftank (54) des Direkteinspeisesystems (14), wobei der Vorratsbehälter (16) zur Ausbringung der in dem Vorratsbehälter (16) befindlichen Flüssigkeit (F) auf eine landwirtschaftliche Nutzfläche in ein Umlaufsystem (12) des landwirtschaftlichen Spritzgeräts integriert ist; und
- Fördern der in den Wirkstofftank (54) des Direkteinspeisesystems (14) eingespülten Flüssigkeit (F) zu Ausbringelementen (30a-30e, 32a-32e) des landwirtschaftlichen Spritzgeräts;
**dadurch gekennzeichnet, dass** die in den Wirkstofftank (54) des Direkteinspeisesystems (14) eingespülte Flüssigkeit (F) über eine separate Ausspülleitung (68) und über Leitungsabschnitte des Umlaufsystems (12) zu den Ausbringelementen (30a-30e, 32a-32e) gefördert wird.

2. Verfahren nach Anspruch 1,
**dadurch gekennzeichnet, dass** während des Förderns der in den Wirkstofftank (54) des Direkteinspeisesystems (14) eingespülten Flüssigkeit (F) zu den Ausbringelementen (30a-30e, 32a-32e) ein Einleiten der in den Wirkstofftank (54) des Direkteinspeisesystems (14) eingespülten Flüssigkeit (F) in den Vorratsbehälter (16) verhindert wird.

3. Verfahren nach Anspruch 1 oder 2,
**gekennzeichnet durch** den Schritt:
- Abgeben der zuvor in den Wirkstofftank (54) des Direkteinspeisesystems (14) eingespülten Flüssigkeit (F) durch die Ausbringelemente (30a-30e, 32a-32e);
wobei während des Abgebens der zuvor in den Wirkstofftank (54) des Direkteinspeisesystems (14) eingespülten Flüssigkeit (F) durch die Ausbringelemente (30a-30e, 32a-32e) ein Einleiten der zuvor in den Wirkstofftank (54) des Direkteinspeisesystems (14) eingespülten Flüssigkeit (F) in den Vorratsbehälter (16) verhindert wird.

4. Verfahren nach Anspruch 2 oder 3,
**dadurch gekennzeichnet, dass** das Umlaufsystem (12) eine oder mehrere mit dem Vorratsbehälter (16) verbundene Rückführleitungen (34, 38, 46) aufweist, mittels welchen Flüssigkeit (F) in den Vorratsbehälter (16) zurückführbar ist, wobei zum Verhindern des Einleitens der in den Wirkstofftank (54) des Direkteinspeisesystems (14) eingespülten Flüssigkeit (F) in den Vorratsbehälter (16) eine oder mehrere Rückführleitungen (34, 38, 46) gesperrt werden.

5. Verfahren nach einem der Ansprüche 2 bis 4,
**dadurch gekennzeichnet, dass** durch ein Anpassen der Pumpleistung einer oder mehrerer Pumpen des landwirtschaftlichen Spritzgeräts die Fördermenge an Flüssigkeit (F) während des Reinigens des Wirkstofftanks (54) derart eingestellt wird, dass die den Ausbringelementen (30a-30e, 32a-32e) zugeleitete Flüssigkeit (F) vollständig abgegeben wird.

6. Verfahren nach einem der vorstehenden Ansprüche,
**dadurch gekennzeichnet, dass** das Fördern der in den Wirkstofftank (54) des Direkteinspeisesystems (14) eingespülten Flüssigkeit (F) zu den Ausbringelementen (30a-30e, 32a-32e) mittels einer Umlaufpumpe (20) erfolgt, welche auch beim Ausbringen der Flüssigkeit (F) aus dem Vorratsbehälter (16) über das Umlaufsystem (12) ohne Spülen des Wirkstofftanks (54) eingesetzt wird.

7. Verfahren nach einem der vorstehenden Ansprüche,
**dadurch gekennzeichnet, dass** die zum Fördern der in den Wirkstofftank (54) des Direkteinspeisesystems (14) eingespülten Flüssigkeit (F) zu den Ausbringelementen (30a-30e, 32a-32e) verwendete Ausspülleitung (68) separat zu einer Einspeiseleitung (58) ausgebildet ist, welche beim aktiven Einspeisen von Wirkstoff (W) aus dem Wirkstofftank (54) in die Flüssigkeit (F) aus dem Vorratstank mittels des Direkteinspeisesystems (14) verwendet wird.

8. Verfahren nach einem der vorstehenden Ansprüche,
**dadurch gekennzeichnet, dass** eine Steuerungseinrichtung des landwirtschaftlichen Spritzgeräts eine Unterbrechung des Einspülens der Flüssigkeit (F) aus dem Vorratsbehälter (16) in den Wirkstofftank (54) des Direkteinspeisesystems (14) veranlasst, wenn
- die den Ausbringelementen (30a-30e, 32a-32e) zugeleitete Durchflussmenge an Flüssigkeit (F) eine maximale Ausbringmenge erreicht oder überschreitet, und/oder
- in dem Wirkstofftank (54) ein vorgegebener Füllstand erreicht oder überschritten wird.

9. Verfahren nach einem der vorstehenden Ansprüche,
**dadurch gekennzeichnet, dass** eine Steuerungseinrichtung des landwirtschaftlichen Spritzgeräts eine Unterbrechung des Absaugens der Flüssigkeit (F) aus dem Wirkstofftank (54) unterbindet, wenn die Ausbringleistung (bspw. an Hand Durchflussmesser gemessen) der Düsen zu gering ist, oder wenn zu wenige Düsen eingeschaltet sind um zu verhindern, dass es zu einer Überdosierung des Wirkstoffs kommt.

10. Landwirtschaftliches Spritzgerät, mit
- einem Umlaufsystem (12), welches einen Flüssigkeitskreislauf aufweist und in welches ein Vorratsbehälter (16) für eine Flüssigkeit (F) integriert ist, wobei der Flüssigkeitskreislauf mit Ausbringelementen (30a-30e, 32a-32e) verbunden ist und eine Zirkulation der Flüssigkeit (F) ermöglicht;
- einem Direkteinspeisesystem (14), mittels welchem ein Wirkstoff (W) aus einem Wirkstofftank (54) in die Flüssigkeit (F) aus dem Vorratsbehälter (16) zum geräteinternen Herstellen einer auszubringenden Spritzflüssigkeit einspeisbar ist; und
- einer Einspülleitung (66), über welche in einem Spülmodus des Spritzgeräts Flüssigkeit (F) aus dem Vorratsbehälter (16) in den Wirkstofftank (54) des Direkteinspeisesystems (14) einspülbar ist, **gekennzeichnet durch** eine separate Ausspülleitung (68), über welche die in den Wirkstofftank (54) des Direkteinspeisesystems (14) eingespülte Flüssigkeit (F) zur Ausbringung über die Ausbringelemente (30a-30e, 32a-32e) in Leitungsabschnitte des Umlaufsystems (12) förderbar ist.

11. Landwirtschaftliches Spritzgerät nach Anspruch 10, **gekennzeichnet durch** eine Steuerungseinrichtung, welche dazu eingerichtet ist, in dem Spülmodus des Spritzgeräts ein Einspülen von Flüssigkeit (F) in den Wirkstofftank (54) des Direkteinspeisesystems (14) zu veranlassen.

12. Landwirtschaftliches Spritzgerät nach Anspruch 10, **dadurch gekennzeichnet, dass** das Umlaufsystem (12) eine oder mehrere mit dem Vorratsbehälter (16) verbundene Rückführleitungen (34, 38, 46) aufweist, mittels welchen Flüssigkeit (F) in den Vorratsbehälter (16) zurückführbar ist, wobei die Steuerungseinrichtung dazu eingerichtet ist, in dem Spülmodus des Spritzgeräts die eine oder die mehreren Rückführleitungen (34, 38, 46) zu sperren, um ein Einleiten der in den Wirkstofftank (54) des Direkteinspeisesystems (14) eingespülten Flüssigkeit (F) in den Vorratsbehälter (16) zu verhindern.

13. Landwirtschaftliches Spritzgerät nach Anspruch 12, **dadurch gekennzeichnet, dass** in der einen oder den mehreren Rückführleitungen (34, 38, 46) jeweils zumindest ein Ventil (36, 40, 48) angeordnet ist, über welches die jeweilige Rückführleitung (34, 38, 46) sperrbar ist.

14. Landwirtschaftliches Spritzgerät nach einem der Ansprüche 10 bis 12, **dadurch gekennzeichnet, dass** das Umlaufsystem (12) eine Umlaufpumpe (20) aufweist, über welche in einem Umlaufmodus des Spritzgeräts Flüssigkeit (F) aus dem Vorratsbehälter (16) über das Umlaufsystem (12) ohne Spülen des Wirkstofftanks (54) zu den Ausbringelementen (30a-30e, 32a-32e) förderbar ist.

15. Landwirtschaftliches Spritzgerät nach Anspruch 13, **dadurch gekennzeichnet, dass** in dem Spülmodus des Spritzgeräts die in den Wirkstofftank (54) des Direkteinspeisesystems (14) eingespülte Flüssigkeit (F) über die Umlaufpumpe (20) zu den Ausbringelementen (30a-30e, 32a-32e) förderbar ist.

16. Landwirtschaftliches Spritzgerät nach einem der Ansprüche 10 bis 14, **dadurch gekennzeichnet, dass** das Direkteinspeisesystem (14) eine separat zu dem Umlaufsystem (12) ausgebildete Einspeiseleitung (58) umfasst, über welche Wirkstoff (W) aus dem Wirkstofftank (54) in einem Einspeisemodus des Spritzgeräts in die Flüssigkeit (F) aus dem Vorratsbehälter (16) einspeisbar ist.

## Claims

1. Method for cleaning an active substance tank (54) of a direct feed system (14) of an agricultural sprayer, comprising the steps of:
- flushing a liquid (F) from a storage container (16) of the agricultural sprayer into the active substance tank (54) of the direct feed system (14), wherein the storage container (16), for the purpose of discharging the liquid (F) in the storage container (16) onto a usable agricultural area, is integrated in a circulation system (12) of the agricultural sprayer; and
- conveying the liquid (F), flushed into the active substance tank (54) of the direct feed system (14), to discharge elements (30a-30e, 32a-32e) of the agricultural sprayer;
**characterized in that** the liquid (F) flushed into the active substance tank (54) of the direct feed system (14) is conveyed to the discharge elements (30a-30e, 32a-32e) via a separate outward flush line (68) and via line sections of the circulation system (12).

2. Method according to Claim 1, **characterized in that**, while the liquid (F) flushed into the active substance tank (54) of the direct feed system (14) is conveyed to the discharge elements (30a-30e, 32a-32e), the liquid (F) flushed into the active substance tank (54) of the direct feed system (14) is prevented from passing into the storage container (16).

3. Method according to Claim 1 or 2, **characterized by** the step of:
- dispensing the liquid (F), previously flushed into the active substance tank (54) of the direct feed system (14), through the discharge elements (30a-30e, 32a-32e);
wherein, while the liquid (F) previously flushed into the active substance tank (54) of the direct feed system (14) is dispensed through the discharge elements (30a-30e, 32a-32e), the liquid (F) previously flushed into the active substance tank (54) of the direct feed system (14) is prevented from passing into the storage container (16).

4. Method according to Claim 2 or 3, **characterized in that** the circulation system (12) has one or more return lines (34, 38, 46) which are connected to the storage container (16) and by means of which liquid (F) can be returned to the storage container (16), wherein one or more return lines (34, 38, 46) are blocked such that the liquid (F) flushed into the active substance tank (54) of the direct feed system (14) is prevented from passing into the storage container (16).

5. Method according to one of Claims 2 to 4, **characterized in that**, by adaptation of the pumping capacity of one or more pumps of the agricultural sprayer, the delivery rate of liquid (F) during the cleaning of the active substance tank (54) is set in such a way that the liquid (F) fed to the discharge elements (30a-30e, 32a-32e) is dispensed completely.

6. Method according to one of the preceding claims, **characterized in that** the liquid (F) flushed into the active substance tank (54) of the direct feed system (14) is conveyed to the discharge elements (30a-30e, 32a-32e) by means of a circulation pump (20), which is also used when the liquid (F) is discharged from the storage container (16) via the circulation system (12) without rinsing the active substance tank (54).

7. Method according to one of the preceding claims, **characterized in that** the outward flushing line (68) used for conveying the liquid (F), flushed into the active substance tank (54) of the direct feed system (14), to the discharge elements (30a-30e, 32a-32e) is designed separately from a feed line (58) which is used when active substance (W) is actively fed from the active substance tank (54) into the liquid (F) from the storage tank by means of the direct feed system (14).

8. Method according to one of the preceding claims, **characterized in that** a control device of the agricultural sprayer causes an interruption of the flushing of the liquid (F) from the storage container (16) into the active substance tank (54) of the direct feed system (14) if
- the flow rate of liquid (F) fed to the discharge elements (30a-30e, 32a-32e) reaches or exceeds a maximum discharge rate, and/or
- a predetermined filling level is reached or exceeded in the active substance tank (54).

9. Method according to one of the preceding claims, **characterized in that** a control device of the agricultural sprayer prevents the suction of the liquid (F) from the active substance tank (54) from being interrupted if the discharge rate (e.g. measured by hand flow meter) of the nozzles is too low, or if too few nozzles are switched on, in order to prevent overdose of the active substance.

10. Agricultural sprayer, with
- a circulation system (12) which has a liquid circuit and in which a storage container (16) for a liquid (F) is integrated, the liquid circuit being connected to discharge elements (30a-30e, 32a-32e) and permitting a circulation of the liquid (F);
- a direct feed system (14), by means of which an active substance (W) can be fed from an active substance tank (54) into the liquid (F) from the storage container (16) for internal production of a spray liquid that is to be discharged; and
- an inward flushing line (66), via which liquid (F) can be flushed from the storage container (16) into the active substance tank (54) of the direct feed system (14) in a flushing mode of the sprayer, **characterized by** a separate outward flushing line (68) via which the liquid (F) flushed into the active substance tank (54) of the direct feed system (14) can be conveyed into line sections of the circulation system (12) for discharge via the discharge elements (30a-30e, 32a-32e).

11. Agricultural sprayer according to Claim 10, **characterized by** a control device which is configured to cause liquid (F) to be flushed into the active substance tank (54) of the direct feed system (14) in the flushing mode of the sprayer.

12. Agricultural sprayer according to Claim 10, **characterized in that** the circulation system (12) has one or more return lines (34, 38, 46) which are connected to the storage container (16) and by means of which liquid (F) can be returned to the storage container (16), the control device being configured to block the one or more return lines (34, 38, 46) in the flushing mode of the sprayer in order to prevent the liquid (F), flushed into the active substance tank (54) of the direct feed system (14), from passing into the storage container (16).

13. Agricultural sprayer according to Claim 12, **characterized in that** at least one valve (36, 40, 48) is arranged respectively in the one or more return lines (34, 38, 46), by means of which valve (36, 40, 48) the respective return line (34, 38, 46) can be blocked.

14. Agricultural sprayer according to one of Claims 10 to 12, **characterized in that** the circulation system (12) has a circulation pump (20) via which, in a circulation mode of the sprayer, liquid (F) can be conveyed from the storage container (16) to the discharge elements (30a-30e, 32a-32e) via the circulation system (12) without rinsing the active substance tank (54).

15. Agricultural sprayer according to Claim 13, **characterized in that**, in the flushing mode of the sprayer, the liquid (F) flushed into the active substance tank (54) of the direct feed system (14) can be conveyed to the discharge elements (30a-30e, 32a-32e) via the circulation pump (20).

16. Agricultural sprayer according to one of the Claims 10 to 14, **characterized in that** the direct feed system (14) comprises a feed line (58) which is designed separately from the circulation system (12) and via which active substance (W) from the active substance tank (54) can be fed into the liquid (F) from the storage container (16) in a feed mode of the sprayer.

## Revendications

1. Procédé de nettoyage d'un réservoir de substance active (54) d'un système d'injection directe (14) d'un pulvérisateur agricole, comportant les étapes suivantes
- incorporation d'un liquide (F) provenant d'un récipient de stockage (16) du pulvérisateur agricole dans le réservoir de substance active (54) du système d'injection directe (14), le récipient de stockage (16) étant intégré dans un système de circulation (12) du pulvérisateur agricole pour l'épandage du liquide (F) se trouvant dans le récipient de stockage (16) sur une surface agricole utile ; et
- refoulement du liquide (F) incorporé dans le réservoir de substance active (54) du système d'injection directe (14) jusqu'à des éléments d'épandage (30a-30e, 32a-32e) du pulvérisateur agricole ;
**caractérisé en ce que** le liquide (F) incorporé dans le réservoir de substance active (54) du système d'injection directe (14) est refoulé jusqu'aux éléments d'épandage (30a-30e, 32a-32e) par le biais d'une conduite de rinçage (68) séparée et par le biais de parties de conduite du système de circulation (12).

2. Procédé selon la revendication 1,
**caractérisé en ce que**, pendant le refoulement du liquide (F) incorporé dans le réservoir de substance active (54) du système d'injection directe (14) jusqu'aux éléments d'épandage (30a-30e, 32a-32e), une introduction, dans le récipient de stockage (16), du liquide (F) incorporé dans le réservoir de substance active (54) du système d'injection directe (14) est empêchée.

3. Procédé selon la revendication 1 ou 2,
**caractérisé par** l'étape suivante :
- distribution du liquide (F) préalablement incorporé dans le réservoir de substance active (54) du système d'injection directe (14) au moyen des éléments d'épandage (30a-30e, 32a-32e) ;
pendant la distribution du liquide (F) préalablement incorporé dans le réservoir de substance active (54) du système d'injection directe (14) au moyen des éléments d'épandage (30a-30e, 32a-32e), une introduction, dans le récipient de stockage (16), du liquide (F) préalablement incorporé dans le réservoir de substance active (54) du système d'injection directe (14) étant empêchée.

4. Procédé selon la revendication 2 ou 3,
**caractérisé en ce que** le système de circulation (12) présente une ou plusieurs conduites de retour (34, 38, 46) reliées au récipient de stockage (16), au moyen desquelles du liquide (F) peut être ramené dans le récipient de stockage (16), une ou plusieurs conduites de retour (34, 38, 46) étant fermées pour empêcher l'introduction, dans le récipient de stockage (16), du liquide (F) incorporé dans le réservoir de substance active (54) du système d'injection directe (14).

5. Procédé selon l'une des revendications 2 à 4, **caractérisé en ce que**, par une adaptation de la puissance de pompage d'une ou plusieurs pompes du pulvérisateur agricole, le débit de liquide (F) pendant le nettoyage du réservoir de substance active (54) est réglé de telle sorte que le liquide (F) amené jusqu'aux éléments d'épandage (30a-30e, 32a-32e) est complètement distribué.

6. Procédé selon l'une des revendications précédentes, **caractérisé en ce que** le refoulement du liquide (F) incorporé dans le réservoir de substance active (54) du système d'injection directe (14) jusqu'aux éléments d'épandage (30a-30e, 32a-32e) s'effectue au moyen d'une pompe de circulation (20), laquelle est utilisée également lors de l'épandage du liquide (F) provenant du récipient de stockage (16) par le biais du système de circulation (12) sans rinçage du réservoir de substance active (54).

7. Procédé selon l'une des revendications précédentes, **caractérisé en ce que** la conduite de rinçage (68) utilisée pour le refoulement du liquide (F) incorporé dans le réservoir de substance active (54) du système d'injection directe (14) jusqu'aux éléments d'épandage (30a-30e, 32a-32e) est formée séparément d'une conduite d'injection (58), laquelle est utilisée lors de l'injection active de substance active (W) provenant du réservoir de substance active (54) dans le liquide (F) provenant du réservoir de stockage au moyen du système d'injection directe (14).

8. Procédé selon l'une des revendications précédentes, **caractérisé en ce qu'**un dispositif de commande du pulvérisateur agricole provoque une interruption de l'incorporation du liquide (F) provenant du récipient de stockage (16) dans le réservoir de substance active (54) du système d'injection directe (14), lorsque
- le débit de liquide (F) amené dans les éléments d'épandage (30a-30e, 32a-32e) atteint ou dépasse un débit d'épandage maximal, et/ou
- un niveau de remplissage prédéfini est atteint ou dépassé dans le réservoir de substance active (54).

9. Procédé selon l'une des revendications précédentes, **caractérisé en ce qu'**un dispositif de commande du pulvérisateur agricole empêche une interruption de l'aspiration du liquide (F) hors du réservoir de substance active (54) lorsque la puissance d'épandage (par exemple mesurée à l'aide de débitmètres) des buses est trop faible, ou lorsque trop peu de buses sont activées, afin d'empêcher qu'un surdosage de la substance active ne survienne.

10. Pulvérisateur agricole, comportant
- un système de circulation (12), lequel présente un circuit de liquide et dans lequel un récipient de stockage (16) pour un liquide (F) est intégré, le circuit de liquide étant relié à des éléments d'épandage (30a-30e, 32a-32e) et permettant une circulation du liquide (F) ;
- un système d'injection directe (14), au moyen duquel une substance active (W) provenant d'un réservoir de substance active (54) peut être injectée dans le liquide (F) provenant du récipient de stockage (16) pour produire à l'intérieur du pulvérisateur un liquide de pulvérisation à épandre ; et
- une conduite d'incorporation (66), par le biais de laquelle, dans un mode de rinçage du pulvérisateur, du liquide (F) provenant du récipient de stockage (16) peut être incorporé dans le réservoir de substance active (54) du système d'injection directe (14),
**caractérisé par** une conduite de rinçage (68) séparée, par le biais de laquelle le liquide (F) incorporé dans le réservoir de substance active (54) du système d'injection directe (14) pour l'épandage par le biais des éléments d'épandage (30a-30e, 32a- 32e) peut être refoulé dans des parties de conduite du système de circulation (12).

11. Pulvérisateur agricole selon la revendication 10, **caractérisé par** un dispositif de commande, lequel est conçu pour provoquer une incorporation de liquide (F) dans le réservoir de substance active (54) du système d'injection directe (14) dans le mode de rinçage du pulvérisateur.

12. Pulvérisateur agricole selon la revendication 10, **caractérisé en ce que** le système de circulation (12) présente une ou plusieurs conduites de retour (34, 38, 46) reliées au récipient de stockage (16), au moyen desquelles du liquide (F) peut être ramené dans le récipient de stockage (16), le dispositif de commande étant conçu pour fermer la ou les plusieurs conduites de retour (34, 38, 46) dans le mode de rinçage du pulvérisateur, afin d'empêcher une introduction, dans le récipient de stockage (16), du liquide (F) incorporé dans le réservoir de substance active (54) du système d'injection directe (14).

13. Pulvérisateur agricole selon la revendication 12, **caractérisé en ce que** respectivement au moins une soupape (36, 40, 48) est disposée dans la ou les plusieurs conduites de retour (34, 38, 46), soupape par le biais de laquelle la conduite de retour (34, 38, 46) respective peut être fermée.

14. Pulvérisateur agricole selon l'une des revendications 10 à 12,
**caractérisé en ce que** le système de circulation (12) présente une pompe de circulation (20) par le biais de laquelle, dans un mode de circulation du pulvérisateur, du liquide (F) provenant du récipient de stockage (16) peut être refoulé jusqu'aux éléments d'épandage (30a-30e, 32a-32e) par le biais du système de circulation (12) sans rinçage de la substance active (54).

15. Pulvérisateur agricole selon la revendication 13, **caractérisé en ce que**, dans le mode de rinçage du pulvérisateur, le liquide (F) incorporé dans le réservoir de substance active (54) du système d'injection directe (14) peut être refoulé jusqu'aux éléments d'épandage (30a-30e, 32a-32e) par le biais de la pompe de circulation (20).

16. Pulvérisateur agricole selon l'une des revendications 10 à 14,
**caractérisé en ce que** le système d'injection directe (14) comprend une conduite d'injection (58) réalisée séparément du système de circulation (12), par le biais de laquelle une substance active (W) provenant du réservoir de substance active (54) peut être injectée dans le liquide (F) provenant du récipient de stockage (16) dans un mode d'injection du pulvérisateur.
